# EUROPEAN PATENT SPECIFICATION

(11) **EP 3 511 549 B1**
(45) Date of publication and mention of the grant of the patent: **20.04.2022**
(21) Application number: 18213532.7
(22) Date of filing: 18.12.2018
(51) Int. Cl.: F02C 7/32

(54) **A GAS TURBINE ENGINE COMPRISING AN ACCESSORY GEARBOX ASSEMBLY**
GASTURBINENTRIEBWERK MIT EINER HILFSGETRIEBEBAUGRUPPE
MOTEUR DE TURBINE À GAZ COMPRENANT UN ENSEMBLE D'ENTRAÎNEMENT D'ACCESSOIRES

(30) Priority: 16.01.2018 GB 201800673
(43) Date of publication of application: 17.07.2019
(73) Proprietor: Rolls-Royce plc, London N1 9FX (GB)
(72) Inventor: Edwards, David, Derby, Derbyshire DE24 8BJ (GB); Thornton, Stewart, Derby, Derbyshire DE24 8BJ (GB)
(74) Representative: Rolls-Royce plc

(56) References cited:
- EP-A2- 1 939 429
- EP-A2- 2 123 883
- FR-A1- 3 014 954
- FR-A1- 3 017 658

## Description

The present disclosure relates to an accessory gearbox assembly and in particular to an accessory gearbox assembly for a gas turbine engine.

An accessory gearbox assembly generally comprises an accessory gearbox and a plurality of accessories. One known accessory gearbox comprises a gear train of spur gears, each of which is arranged to drive a respective one of the accessories. The accessories are either mounted on the upstream end of the accessory gearbox, the downstream end of the accessory gearbox or the upstream end and the downstream end of the accessory gearbox. The accessories include a low pressure fuel pump, a high pressure fuel pump, a fuel flow governor, an oil pump, a hydraulic pump, a starter motor, an electrical generator, a tachometer, a permanent magnet alternator, e.g. a permanent electrical generator. Thus, the accessory gearbox carries and drives the accessories. The accessory gearbox is driven by a drive shaft which extends generally radially with respect to the axis of the gas turbine engine from an internal gearbox driven by one or more shafts of the gas turbine engine.

The accessory gearbox is mounted on the fan casing of a turbofan gas turbine engine or is mounted on the core engine casing of a turbofan gas turbine engine or other type of gas turbine engine. The accessory gearbox is generally arranged such that it forms an arcuate shape which extends circumferentially around the fan casing, or the core engine casing, and the axes of the accessories are arranged generally parallel to the axis of the gas turbine engine and as mentioned above the accessories are mounted on the axially upstream end of the accessory gearbox, the axially downstream end of the accessory gearbox or the axially upstream end and the axially downstream end of the accessory gearbox.

However, in the case of this type of accessory gearbox mounted on the core engine casing of a gas turbine engine, e.g. a turbofan gas turbine engine, the accessory gearbox prevents other components extending axially along the core engine casing.

In another accessory gearbox assembly the axes of the accessories are arranged perpendicular to a plane containing the axis of the gas turbine engine, e.g. the turbofan gas turbine engine, and the accessory gearbox is generally arranged such that it extends axially along the fan casing or the core engine casing. The accessories are either mounted on one of the circumferentially, tangentially, spaced ends of the accessory gearbox or both of the circumferentially, tangentially, spaced ends of the accessory gearbox.

However, with this type of accessory gearbox mounted on the core engine casing of a turbofan gas turbine engine at least some of the larger accessories may either protrude through an aerodynamic nacelle arranged around the core engine casing or the shape of aerodynamic nacelle may have to be adjusted so that the accessories are located within the aerodynamic nacelle. These alternatives affect the flow of air through a fan duct, or a bypass duct, arranged between the aerodynamic nacelle around the core engine and an outer aerodynamic nacelle.

In a further accessory gearbox assembly the axes of the accessories are arranged in a V-shape and the accessory gearbox is generally arranged such that it extends axially along the fan casing or the core engine casing. With this type of accessory gearbox mounted on the core engine casing of a turbofan gas turbine engine it is possible to arrange the accessories such that they do not protrude through the aerodynamic nacelle arranged around the core engine casing. This accessory gearbox assembly has a shaft driven by a bevel gear and the shaft is arranged parallel to the axis of the gas turbine engine. The shaft has a plurality of axially spaced bevel gears each of which is arranged to drive a bevel gear of an accessory. In this arrangement it is necessary to accurately align the bevel gears on the shaft and the bevel gears of the accessories using shims and this is difficult and time consuming.

EP 2123883 A2 discloses a gearbox assembly integrally formed with the annular transition duct, comprising a plurality of lobes such that auxiliary components and accessories mounted on the gearbox can be distributed at different locations optimised for their function.

FR 3017658 A1 discloses a gearbox for driving at least one apparatus annexed to the turbine engine, comprising a housing containing two kinematic chains connected to a power take-of member at one end of each chain.

Accordingly the present disclosure seeks to provide a novel accessory gearbox assembly which reduces or overcomes the above-mentioned problems.

According to a first aspect of the present disclosure there is provided a gas turbine engine comprising an accessory gearbox assembly comprising an accessory gearbox and a plurality of accessories arranged to be driven by the accessory gearbox, the accessory gearbox comprising a gear train and an accessory gearbox casing enclosing the gears of the gear train, each accessory is driven by a shaft,
a first plurality of accessories are secured to a first side of the accessory gearbox casing, the shafts of the first plurality of accessories are parallel, the shaft of each accessory of the first plurality of accessories has a spur gear, the shaft of a first accessory of the first plurality of accessories has a bevel gear, a second plurality of accessories are secured to a second opposite side of the accessory gearbox casing, the shafts of the second plurality of accessories are parallel, the shaft of each accessory of the second plurality of accessories has a spur gear, the shaft of a second accessory of the second plurality of accessories has a bevel gear,
the gear train comprises the spur gears of the accessories, the bevel gear of the first accessory is arranged to mesh with a further bevel gear and the bevel gear of the second accessory is arranged to mesh with the further bevel gear, the shafts of the accessories are arranged in a V-shape, and the further bevel gear is arranged to drive the accessory gearbox assembly, wherein the further bevel gear (40) is arranged on the radially outer end of a radial drive shaft, and
wherein the axis of the drive shaft 72A, 72B, 72 of each accessory 48 intersects the vertical plane Z containing the axis 11 of the gas turbine engine 10 and the radial drive shaft 38 , and
wherein the accessory gearbox casing (56) is mounted on a core engine casing (50) of the gas turbine engine (10), a core nacelle (52) is arranged around the core engine casing (50), the accessory gearbox (46) and the plurality of accessories (48, 48A, 48B) are arranged radially between the core engine casing (50) and the core nacelle (52)

The spur gears of a least some of the accessories may be arranged to mesh to transmit drive through the gear train. The spur gear on the shaft of each accessory may be arranged to mesh with one or more spur gears on the corresponding shaft of other accessories.

The gear train may comprise at least one idler gear, the spur gears of a least some of the accessories are arranged to mesh with idler gears to transmit drive through the gear train. The spur gear on the shaft of each accessory may be arranged to mesh with one or more idler gears which mesh with the spur gears on the corresponding shaft of other accessories.

The shaft of each accessory may be supported on an associated accessory casing by two bearings. This feature is not the subject of a claim.

The at least one accessory may be the highest power and/or the highest torque accessory. The at least one accessory may be a starter, an electrical motor or an electrical generator. The electrical motor may be an electrical starter motor.

The first accessory may be a starter, an electrical motor or an electrical generator. The electrical motor may be an electrical starter motor. The second accessory may be an electrical generator.

The drive shafts of the first plurality of accessories may be arranged in a first plane and the drive shafts of the second plurality of accessories are arranged in a second plane. The first plane and the second plane may be arranged at an angle of less than 180°. The first plane and the second plane may be arranged at an angle of less than 160° and more than 120°. The first plane and the second plane may be arranged at an angle of 140°.

The further bevel gear may be driven by an additional bevel gear. The further bevel gear may be arranged to be driven by a starter or starter motor.

The gas turbine engine may have an axis and the accessory gearbox casing extends axially with respect to the gas turbine engine. The core engine casing may be arranged in the angle between the first plane and the second plane. The first and second planes may intersect a vertical plane containing the axis of the gas turbine engine. The first plane may be horizontal (this feature is not the subject of a claim).

A heat shield may be arranged radially between the accessory gearbox and the plurality of accessories and the core casing.

The gas turbine engine may be a turbofan gas turbine engine or a geared turbofan gas turbine engine. This feature is not the subject of a claim.

Embodiments will now be described by way of example only, with reference to the Figures, in which:
Figure 1 is a sectional side view of a gas turbine engine having an accessory gearbox assembly according to the present disclosure.
Figure 2 is an enlarged view of the accessory gearbox assembly in the direction of arrow A in Figure 1.
Figure 3 is a view of the accessory gearbox assembly in the direction of arrow B in Figure 2.
Figure 4 is an enlarged view of an upstream end of the accessory gearbox assembly and a mounting arrangement to the gas turbine engine shown in Figure 1.
Figure 5 is an enlarged view of a downstream end of the accessory gearbox assembly and a mounting arrangement to the gas turbine engine shown in Figure 1.
Figure 6 is an enlarged view of an alternative accessory gearbox assembly in the direction of arrow A in Figure 1.
Figure 7 is a view of the alternative accessory gearbox assembly in the direction of arrow C in Figure 6.
Figure 8 is an enlarged view of an additional accessory gearbox assembly in the direction of arrow A in Figure 1.
Figure 9 is a view of the additional accessory gearbox assembly in the direction of arrow D in Figure 8.
Figure 10 is an alternative view of the accessory gearbox assembly in the direction of arrow B in Figure 2.
Figure 11 is an alternative view of the accessory gearbox assembly in the direction of arrow B in Figure 2.
Figure 12 is an alternative view of the accessory gearbox assembly in the direction of arrow B in Figure 2.

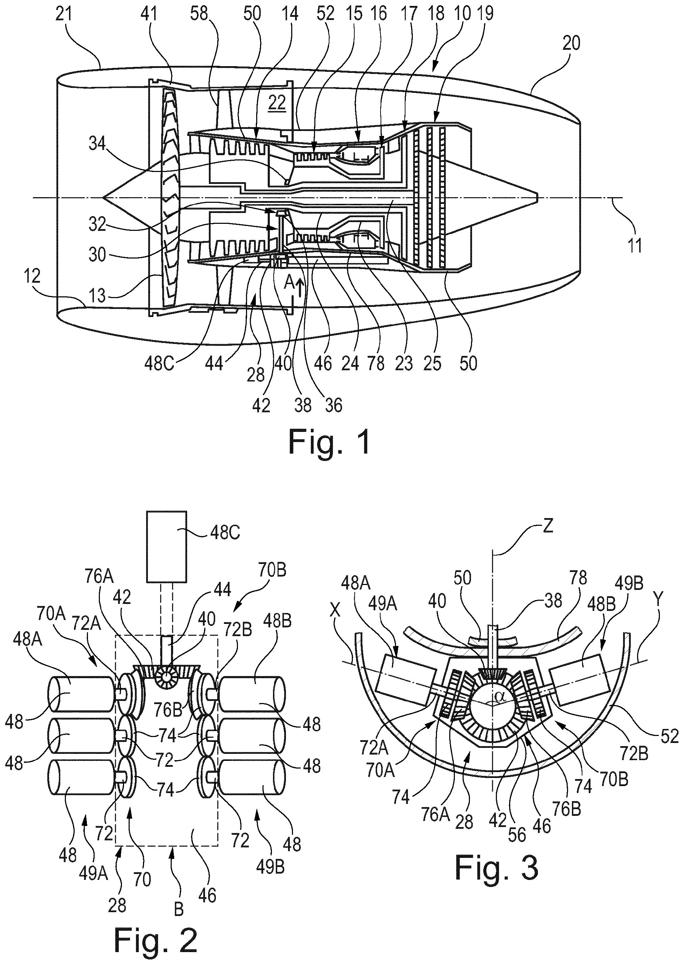

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shafts 23, 24 and 25 respectively.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

A core engine casing 50 is secured to a fan casing 41 which surrounds the fan 13 by a plurality of radially extending circumferentially spaced fan outlet guide vanes 58. The fan casing 41 is integrated into the structure of the nacelle 21. A core nacelle 52 defines a radially inner surface, or radially inner boundary, of the bypass duct 22 and the nacelle 21 defines the radially outer surface, or radially outer boundary, of the bypass duct 22. The nacelle 21 and the core nacelle 52 are aerodynamically shaped to optimise the flow of air through the bypass duct 22 and the nacelle 21 is aerodynamically shaped to optimise the flow of air over the radially outer surface of the nacelle 21.

The gas turbine engine 10 further comprises an accessory gearbox assembly 28. The accessory gearbox assembly 28 is drivingly connected to the shaft 23 connecting the high pressure compressor 15 and the high pressure turbine 17 via drive means 30. However, in other embodiments the accessory gearbox assembly 28 may be driven by the shaft 24 connecting the intermediate pressure compressor 14 and the intermediate pressure turbine 18 or by the shaft 25 connecting the fan 13 and the low pressure turbine 19. In this arrangement the drive means 30 comprises an internal gearbox 32 provided at the upstream end of the shaft 23. The internal gearbox 32 comprises a bevel gear 34 at the upstream end of the shaft 23 and a bevel gear 36 arranged on the radially inner end of a radial drive shaft 38. The bevel gear 36 on the radial drive shaft 38 is arranged to mesh with the bevel gear 34 on the shaft 23. The radial drive shaft 38 extends through a strut extending across the flow path from the intermediate pressure compressor 14 to the high pressure compressor 15. A bevel gear 40 is provided on the radially outer end of the radial drive shaft 38 and the bevel gear 40 is arranged to mesh with a further bevel gear 42 on a shaft 44. The further bevel gear 42 is arranged to provide drive for the accessory gearbox assembly 28.

The accessory gearbox assembly 28 comprises an accessory gearbox 46 and a plurality of accessories 48 arranged to be driven by the accessory gearbox 46. The accessory gearbox 46 is mounted on the core engine casing 50 and is arranged radially within the core nacelle 52 which is arranged around the core engine casing 50 and thus the accessory gearbox 46 is arranged radially between the core engine casing 50 and the core nacelle 52. The accessories 48 are also arranged radially between the core engine casing 50 and the core nacelle 52. An accessory gearbox casing 56 of the accessory gearbox 46 is mounted on the core engine casing 50.

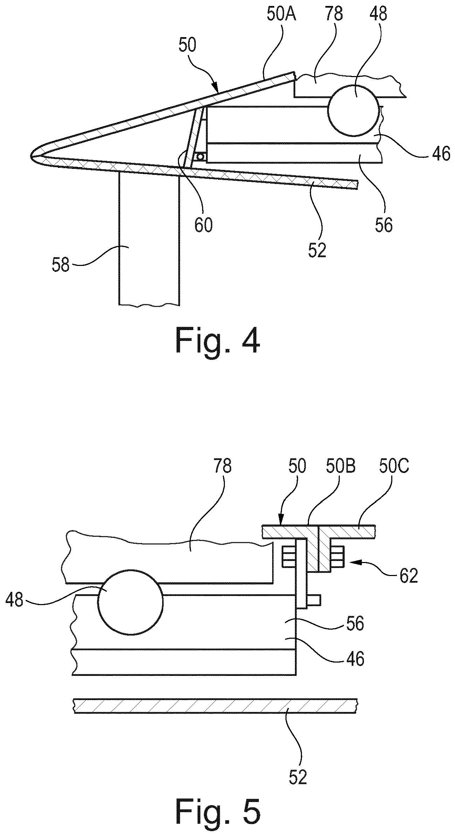

The accessory gearbox casing 56 is mounted at an upstream end, as shown more clearly in Figure 4 to a structural panel 60 connecting the radially inner ends of the fan outlet guide vanes 58 to the core engine casing 50 in a region of the core engine casing 50A around the intermediate pressure compressor 14. The accessory gearbox casing 56 is mounted at a downstream end, as shown more clearly in Figure 5, to the core engine casing 50 and in particular to a flanged joint 62 between the core engine casing 50B around the high pressure turbine 17 and the core engine casing 50C around the intermediate pressure turbine 18 in this example with a high pressure turbine 17, an intermediate pressure turbine 18 and a low pressure turbine 19. The accessory gearbox casing 56 is mounted at a downstream end to a flanged joint between the casing of the high pressure turbine and the casing of the low pressure turbine in an example with a high pressure turbine and a low pressure turbine.

A shown in Figures 1, 4 and 5, the accessory gearbox assembly 28 is arranged at a vertically lower region, a bottom region, of the gas turbine engine 10 in order to enable easy access to the accessories 48 for maintenance purposes.

As mentioned briefly above, the accessory gearbox assembly 28 comprises an accessory gearbox 46 and a plurality of accessories 48 arranged to be driven by the accessory gearbox 46. The accessory gearbox assembly 28 will be described in more detail with reference to Figures 2 and 3 which show the accessory gearbox assembly 28 more clearly. The accessory gearbox 46 comprises a gear train 70 and an accessory gearbox casing 56 enclosing the gears of the gear train 70. Each accessory 48 is driven by a shaft 72, the shaft 72 of each accessory 48 has a spur gear 74 and the gear train 70 comprises the spur gears 74 of the accessories 48. The shaft 72A, 72B of at least one of the accessories 48A, 48B has a bevel gear 76A, 76B. The bevel gear 76A, 76B is arranged to mesh with the further bevel gear and the further bevel gear 42 is arranged to drive the accessory gearbox assembly 28. The accessories 48 include a low pressure fuel pump, a high pressure fuel pump, a fuel flow governor, an oil pump, a hydraulic pump, a starter, a starter motor, an electrical generator, a tachometer, a permanent magnet alternator, e.g. a permanent electrical generator.

The spur gears 74 of the accessories 48 are arranged to mesh to transmit drive through the gear train 70. The spur gear 74 on the shaft 72 of each accessory 48 is arranged to mesh with one or more spur gears 74 on the corresponding shaft 72 of other accessories 48. The shaft 72 of each accessory 48 is supported on an associated accessory casing by two bearings (not shown).

It is to be noted that in this arrangement there is a first plurality of accessories 49A secured to a first side of the accessory gearbox casing 56 and the shafts 72 of the first plurality of accessories 49A are parallel. The at least one accessory 48A is the highest power and/or the highest torque accessory. The at least one accessory 48A is a starter, an electrical motor or an electrical generator. The electrical motor may be an electrical starter motor. The starter may be a pneumatic starter, or a hydraulic starter. The starter or electrical starter motor is arranged to start the gas turbine engine 10.

It is to be noted that in this arrangement there is a second plurality of accessories 49B secured to a second opposite side of the accessory gearbox casing 56 and the drive shafts 72 of the second plurality of accessories 49B are parallel. The shaft 72A of a first accessory 48A of the first plurality of accessories 49A has a bevel gear 76A and the shaft 72B of a second accessory 48B of the second plurality of accessories 49B has a bevel gear 76B. The bevel gear 76A of the first accessory 48A is arranged to mesh with the further bevel gear 42 and the bevel gear 76B of the second accessory 48B is arranged to mesh with the further bevel gear 42. The accessories 48A and 48B are the highest power and/or the highest torque accessories. As mentioned above the first accessory 48A may be a starter, an electrical motor or an electrical generator. The second accessory 48B may be an electrical generator. The accessories 48 are generally arranged in the accessory gearbox assembly 28 in order of decreasing power requirements and/or decreasing torque requirements. The accessories 48A, 48B, requiring the greatest power and/or the greatest torque are arranged to be driven directly by the bevel gears 76 and the shafts 72A or 72B, e.g. the accessories 48A and 48B requiring the greatest power and/or the greatest torque are at arranged a location in the gear train 70 nearest to the further bevel gear 42. The accessories 48 requiring the least power and/or the least torque are arranged to be driven by the spur gears 74 and shafts 72 at locations in the gear train 70 remotest from the shafts 72A, 72B, e.g. the accessories 48 requiring the least power and/or the least torque are arranged at a location the gear train 70 furthest from the further bevel gear 42.

The drive shafts 72, 72A of the first plurality of accessories 49A are arranged in a first plane X and the drive shafts 72, 72B of the second plurality of accessories 49B are arranged in a second plane Y. The first plane X and the second plane Y are arranged at an angle α of less than 180°. The first plane X and the second plane Y may be arranged at an angle α of less than 160° and more than 120°. The first plane X and the second plane Y may for example be arranged at an angle α of 140° or other suitable angles. The first and second planes X and Y respectively are non-coplanar with a horizontal plane. The drive shafts 72 of the accessories 48 are arranged in a V-shape and thus the axes of the accessories 48 are arranged in a V-shape. The accessories 48 are cantilevered off the accessory gearbox casing 56 and the remote ends of the accessories 48 are arranged vertically higher than the ends of the accessories 48 secured to the accessory gearbox casing 56. This allows all the accessories 48 to fit in the curved space between the core engine casing 50 and the core nacelle 52.

The accessory gearbox casing 56 is hexagonal in cross-section and the accessory gearbox casing 56 may have an irregular hexagonal cross-section or a regular hexagonal cross-section. The accessories 48 are secured to two sides separated by one side and three sides of the hexagonal accessory gearbox casing 56. The accessory gearbox casing 56 may also have a pentagonal cross-section or an isosceles trapezium cross-section.

The further bevel gear 42 is arranged to be driven by an additional bevel gear, the bevel gear 40. The further bevel gear 42 may be arranged to be driven by a starter or a starter motor 48C via the shaft 44 to start the gas turbine engine 10.

The additional bevel gear, the bevel gear, 40 is arranged on the radially outer end of the radial drive shaft 38.

The accessory gearbox 46 and the accessory gearbox casing 56 extend axially with respect to the axis 11 of the gas turbine engine 10. The core engine casing 50 is arranged in the angle α between the first plane X and the second plane Y. The first and second planes X and Y respectively intersect a vertical plane Z containing the axis 11 of the gas turbine engine 10 and the vertical plane Z bisects the angle α. The first and second planes X and Y respectively are non-coplanar with a horizontal plane. The radial drive shaft 38 is also arranged in the vertical plane Z. The axis of the drive shaft 72A, 72B, 72 of each accessory 48 intersects the vertical plane Z containing the axis 11 of the gas turbine engine 10 and the radial drive shaft 38. The axis of the drive shaft 72A, 72 of each accessory 48 in the first plurality of accessories 49A intersects the vertical plane Z containing the axis 11 of the gas turbine engine 10 and the radial drive shaft 38 from a first side of the vertical plane Z and the axis of the drive shaft 72B, 72 of each accessory 48 in the second plurality of accessories 49B intersects the vertical plane Z containing the axis 11 of the gas turbine engine 10 and the radial drive shaft 38 from a second, opposite, side of the vertical plane Z. Thus, as seen the drive shafts 72A, 72B, 72 of the accessories 48 are arranged in a V-shape and thus the axes of the accessories 48 are arranged in a V-shape.

The accessory gearbox assembly 28 has all the accessories 48 in the first plurality of accessories 49A arranged in the first plane X on a first axial side of the accessory 48A and all of the accessories 48 in the second plurality of accessories 49B arranged in the second plane Y on a first axial side of the accessory 48B with respect to the axis 11 of the gas turbine engine 10. The accessories 48 in the first plurality of accessories 49A are spaced apart axially and the accessories 48 in the second plurality of accessories 49B are spaced apart axially with respect to the axis 11 of the gas turbine engine 10.

The accessory gearbox assembly 28 may not have a starter or a starter motor 48C to start the gas turbine engine 10 and in such circumstances the accessory 48A is a starter or starter motor.

The gear train 70 comprises a first gear train portion 70A and a second gear train portion 70B. The first gear train portion 70A comprises the spur gears 74 on the shafts 72, 72A of the accessories 48, 48A of the first plurality of accessories 49A and the bevel gear 76A on the shaft 72A of the first accessory 48A of the first plurality of accessories 49A. The second gear train portion 70B comprises the spur gears 74 on the shafts 72, 72B of the accessories 48, 48B of the second plurality of accessories 49B and the bevel gear 76B on the shaft 72B of the second accessory 48B of the second plurality of accessories 49B. The bevel gear 76A of the first accessory 48A drives the first gear train portion 70A and hence the accessories 48, 48A of the first plurality of accessories 49A. The bevel gear 76B of the second accessory 48B drives the second gear train portion 70B and hence the accessories 48, 48B of the second plurality of accessories 49B.

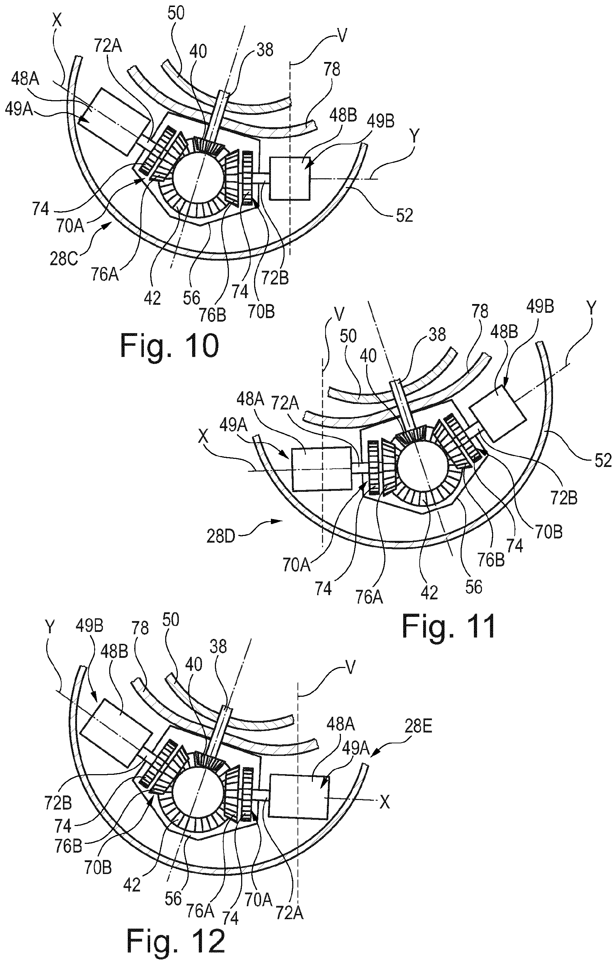

In another accessory gearbox assembly 28C, as shown in Figure 10, the first plurality of accessories 49A may be longer than the second plurality of accessories 49B and the second plurality of accessories 49B are arranged in a second plane Y arranged coplanar with a horizontal plane. In this arrangement the radial drive shaft 38 is not arranged in the vertical plane Z. In a further accessory gearbox assembly 28D, as shown in Figure 11, the first plurality of accessories 49A may be longer than the second plurality of accessories 49B and the first plurality of accessories 49A are arranged in a first plane X arranged coplanar with a horizontal plane. In this arrangement the radial drive shaft 38 is not arranged in the vertical plane Z. In another accessory gearbox assembly 28E, as shown in Figure 12, the first plurality of accessories 49A are arranged in a first plane X arranged coplanar with a horizontal plane. In Figures 10, 11 and 12 the axis of the drive shaft of each accessory 48 intersects a plane containing the axis 11 of the gas turbine engine 10 and the radial drive shaft 38. The axis of the drive shaft 72A, 72 of each accessory 48 in the first plurality of accessories 49A intersects the plane containing the axis 11 of the gas turbine engine 10 and the radial drive shaft 38 from a first side of the plane containing the axis 11 of the gas turbine engine 10 and the radial drive shaft 38 and the axis of the drive shaft 72B, 72 of each accessory 48 in the second plurality of accessories 49B intersects the plane containing the axis 11 of the gas turbine engine 10 and the radial drive shaft 38 from a second, opposite, side of the plane containing the axis 11 of the gas turbine engine 10 and the radial drive shaft 38. The drive shafts 72 of the accessories 48 are arranged in a V-shape and thus the axes of the accessories 48 are arranged in a V-shape.

A heat shield 78 is arranged radially between the accessory gearbox 46 and the plurality of accessories 48 and the core engine casing 50. The heat shield 78 extends over an arc around the circumference of the core engine casing 50 to reduce or prevent heat radiation, heat conduction or heat convection from the components of the gas turbine engine 10 to the accessory gearbox 46 and the accessories 48. The arc of the heat shield 78 extends over an angle sufficient to shield the accessory gearbox 46 and the full length of all of the accessories 48. The heat shield 78 may be an insulating blanket. The insulating blanket may comprise a fibrous insulating material located between two metal skins, e.g. steel skins. The heat shield 78 is secured to the core engine casing 50.

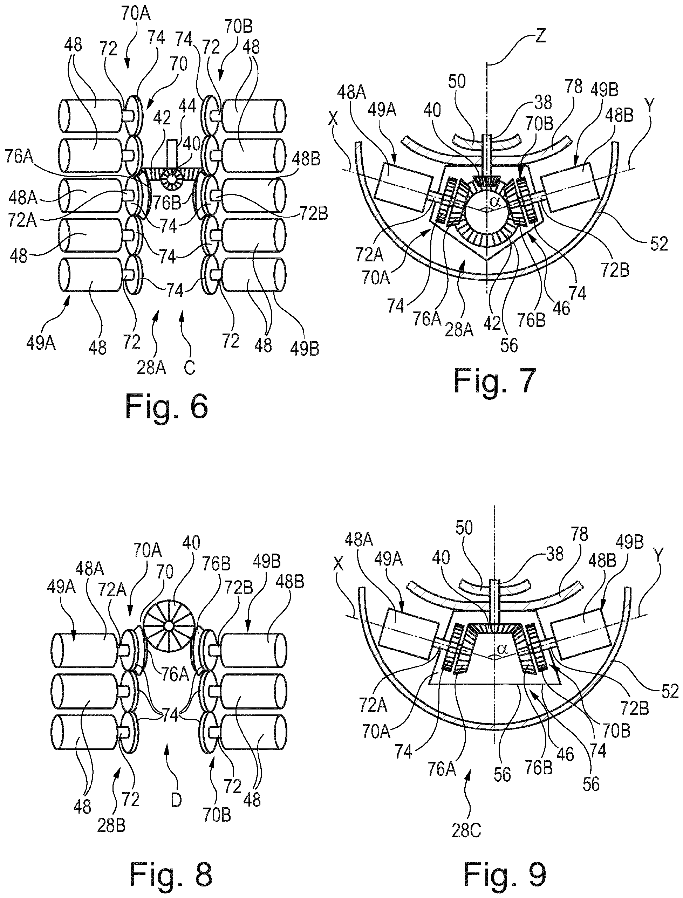

Another accessory gearbox assembly 28A will be described with reference to Figures 6 and 7 and the accessory gearbox in Figures 6 and 7 is similar to the accessory gearbox assembly 28 shown in Figures 2 and 3 and like part are denoted by like numerals. The accessory gearbox assembly 28A differs in that some of the accessories 48 in the first plurality of accessories 49A are arranged in the first plane X on a first axial side of the accessory 48A with respect to the axis 11 of the gas turbine engine 10 and some of the accessories 48 in the first plurality of accessories 49A are arranged in the first plane X on a second, opposite, axial side of the accessory 48A with respect to the axis 11 of the gas turbine engine 10 and some of the accessories 48 in the second plurality of accessories 49B are arranged in the second plane Y on a first axial side of the accessory 48B with respect to the axis 11 of the gas turbine engine 10 and some of the accessories 48 in the second plurality of accessories 49B are arranged in the second plane Y on a second, opposite, axial side of the accessory 48B with respect to the axis 11 of the gas turbine engine 10. The accessory gearbox casing 56 is pentagonal in cross-section and the accessory gearbox casing 56 may have an irregular pentagonal cross-section or a regular pentagonal cross-section. The accessories 48 are secured to two sides on opposite ends of the base of the pentagonal accessory gearbox casing 56. The accessory gearbox assembly 28A may have a starter or a starter motor 48C to start the gas turbine engine 10 or the accessory gearbox assembly 28A may not have a starter or a starter motor 48C to start the gas turbine engine 10 and in such circumstances the accessory 48A is a starter or starter motor.

Another accessory gearbox assembly 28B will be described with reference to Figures 8 and 9 and the accessory gearbox in Figures 8 and 9 is similar to the accessory gearbox assembly 28 shown in Figures 2 and 3 and like part are denoted by like numerals. The accessory gearbox assembly 28B differs in that the bevel gear 40 on the radial drive shaft 38 meshes with the bevel gears 76 on the shafts 72A and 72B of the accessories 48A and 48B of the first and second plurality of accessories respectively. This accessory gearbox assembly 28B has dispensed with the further bevel gear 42 reducing complexity. The accessory gearbox casing 56 is has an isosceles trapezium cross-section. The accessories 48 are secured to the non-parallel sides of the accessory gearbox casing 56. The accessory gearbox assembly 28B does not have a starter or a starter motor 48C to start the gas turbine engine 10 and in such circumstances the accessory 48A is a starter or starter motor.

In the accessory gearbox assemblies 28, 28A, 28C, 28D and 28E shown in Figures 2 and 3, 6 and 7, 10, 11and 12 respectively the axes of the shafts 72A and 72B intersect the axis of the further bevel gear 42 and define an angle α between the axes of the shafts 72A and 72B. The angle α is less than 180° and in particular the angle α is less than 160° and more than 120°and for example the angle α is 140°. In the accessory gearbox assembly 28B shown in Figures 8 and 9 the axes of the shafts 72A and 72B intersect a line parallel to the axis of the bevel gear 40 and define an angle α between the axes of the shafts 72A and 72B. The angle α is less than 180° and in particular the angle α is less than 160° and more than 120°and for example the angle α is 140°.

In all of the accessory gearbox assemblies of the present disclosure the drive shafts of the accessories are arranged in a V-shape and the drive shafts of the accessories are axially spaced apart with respect to the axis of the gas turbine engine and thus the axes of the accessories are arranged in a V-shape and thus the axes of the accessories are axially spaced apart with respect to the axis of the gas turbine engine.

An advantage of all of the accessory gearbox assemblies of the present disclosure compared to an accessory gearbox assembly which is generally arranged such that the auxiliary gearbox forms an arcuate shape which extends circumferentially around the core engine casing is that it allows other components to extend axially along the core engine casing.

An advantage of all of the accessory gearbox assemblies of the present disclosure compared to an accessory gearbox assembly which is generally arranged such that the auxiliary gearbox extends axially along the core engine casing is that it is possible to arrange the larger accessories so that they do not protrude through an aerodynamic nacelle arranged around the core engine casing and/or the shape of the aerodynamic nacelle does not have to be adjusted so that the accessories are located within the aerodynamic nacelle, e.g. all the accessories fit within the space between the core engine casing and the core nacelle. Thus, the flow of air through the fan duct, or the bypass duct, arranged between the aerodynamic core nacelle around the core engine and an outer aerodynamic nacelle is not compromised by the accessory gearbox assembly.

An advantage of all of the accessory gearbox assemblies of the present disclosure compared to an accessory gearbox assembly which arranges the axes of the accessories such that they are arranged in a V-shape and the accessory gearbox is generally arranged such that it extends axially along the fan casing or the core engine casing is that there is no need for a shaft driven by a bevel gear which is arranged parallel to the axis of the gas turbine engine. Furthermore, there is no need for a shaft which has a plurality of axially spaced bevel gears each of which is arranged to drive a bevel gear of an accessory. This dispenses with the necessity to accurately align the bevel gears on the shaft and the bevel gears of the accessories using shims and thus the assembly of the gearbox assembly is easier and less time consuming.

Although the present disclosure has referred to a gear train in which the spur gear on the shaft of each accessory meshes directly with the spur gear on the shaft of one or more accessories, the gear train of any of the previously described accessory gearbox assemblies may comprise at least one idler gear, the spur gears of a least some of the accessories are arranged to mesh with idler gears to transmit drive through the gear train and the spur gear on the shaft of each accessory may be arranged to mesh with one or more idler gears which mesh with the spur gears on the corresponding shaft of other accessories.

Although the present disclosure has referred to a turbofan gas turbine engine it is equally applicable to a geared turbofan gas turbine engine, especially a geared turbofan gas turbine engine comprising a low pressure turbine arranged to drive an intermediate pressure compressor via a shaft, a fan driven by the low pressure turbine via the shaft and a gearbox and a high pressure turbine arranged to drive a high pressure compressor via a second shaft.

## Claims

1. A gas turbine engine (10) comprising an accessory gearbox assembly (28) comprising an accessory gearbox (46) and a plurality of accessories (48) arranged to be driven by the accessory gearbox (46), the accessory gearbox (46) comprising a gear train (70) and an accessory gearbox casing (56) enclosing the gears of the gear train (70), each accessory (48) is driven by a shaft (72),
a first plurality of accessories (49A) are secured to a first side of the accessory gearbox casing (56), the shafts (72) of the first plurality of accessories (49A) are parallel, the shaft (72) of each accessory (48, 48A) of the first plurality of accessories (49A) has a spur gear (74), the shaft (72A) of a first accessory (48A) of the first plurality of accessories (49A) has a bevel gear (76A),
a second plurality of accessories (49B) are secured to a second opposite side of the accessory gearbox casing (56), the shafts (72) of the second plurality of accessories (49B) are parallel, the shaft (72) of each accessory (48, 48B) of the second plurality of accessories (49B) has a spur gear (74), the shaft (72B) of a second accessory (48B) of the second plurality of accessories (49B) has a bevel gear (76B),
the gear train (70) comprises the spur gears (74) of the accessories (48, 48A, 48B),
the bevel gear (76A) of the first accessory (48A) is arranged to mesh with a further bevel gear (42) and the bevel gear (76B) of the second accessory (48B) is arranged to mesh with the further bevel gear (42), the shafts (72) of the accessories (48, 48A, 48B) are arranged in a V-shape, and the further bevel gear (42) is arranged to drive the accessory gearbox assembly (28), wherein the further bevel gear (42) is arranged on the radially outer end of a radial drive shaft,
**characterised in that** the axis of the drive shaft 72A, 72B, 72 of each accessory 48 intersects the vertical plane Z containing the axis 11 of the gas turbine engine 10 and the radial drive shaft 38, and
the accessory gearbox casing (56) is mounted on a core engine casing (50) of the gas turbine engine (10), a core nacelle (52) is arranged around the core engine casing (50), the accessory gearbox (46) and the plurality of accessories (48, 48A, 48B) are arranged radially between the core engine casing (50) and the core nacelle (52).

2. A gas turbine engine as claimed in claim 1 wherein the spur gears (74) of a least some of the accessories (48, 48A, 48B) are arranged to mesh to transmit drive through the gear train (70).

3. A gas turbine engine as claimed in claim 2 wherein the spur gear (74) on the shaft (72, 72A, 72B) of each accessory (48, 48A, 48B) is arranged to mesh with one or more spur gears (74) on the corresponding shaft (72) of other accessories (48, 48A, 48B).

4. A gas turbine engine as claimed in claim 1 or claim 2 wherein the gear train comprises at least one idler gear, the spur gears of a least some of the accessories are arranged to mesh with idler gears to transmit drive through the gear train.

5. A gas turbine engine as claimed in claim 4 wherein the spur gear on the shaft of each accessory is arranged to mesh with one or more idler gears which mesh with the spur gears on the corresponding shaft of other accessories.

6. A gas turbine engine as claimed in any of claims 1 to 5 wherein the first accessory (48A, 48B) is the highest power and/or the highest torque accessory.

7. A gas turbine engine as claimed in claim 6 wherein the first accessory (48A, 48B) is a starter, an electrical motor or an electrical generator.

8. A gas turbine engine as claimed in any of claims 1 to 5 wherein the first accessory (48A) is a starter, an electrical motor or an electrical generator.

9. A gas turbine engine as claimed in any of claims 1 to 8 wherein the second accessory (48B) is an electrical generator.

10. A gas turbine engine as claimed in any of claims 1 to 9 wherein the shafts (72) of the first plurality of accessories (49A) are arranged in a first plane (X) and the shafts (72) of the second plurality of accessories (49B) are arranged in a second plane (Y).

11. A gas turbine engine as claimed in claim 10 wherein the first plane (X) and the second plane (Y) are arranged at an angle of less than 180°.

12. A gas turbine engine as claimed in any of claims 1 to 11 wherein the further bevel gear (42) is driven by an additional bevel gear (40).

13. A gas turbine engine as claimed in claim 12 wherein the further bevel gear (42) is arranged to be driven by a starter or starter motor (48C).

14. A gas turbine engine as claimed in either of claims 12 or 13 wherein the additional bevel gear (40) is arranged on the radially outer end of a radial drive shaft (38).

15. A gas turbine engine as claimed in any of claims 10 to 14, wherein the gas turbine engine (10) has an axis (11) and the accessory gearbox casing (56) extends axially with respect to the gas turbine engine (10), the core engine casing (50) is arranged in the angle between the first plane (X) and the second plane (Y).

16. A gas turbine engine as claimed in claim 15 wherein the first and second planes (X, Y) intersect a vertical plane (Z) containing the axis (11) of the gas turbine engine (10).

17. A gas turbine engine as claimed in any preceding claim wherein a heat shield (78) & is arranged radially between the accessory gearbox (46) and the plurality of accessories (48, 48A, 48B) and the core casing (50).

## Patentansprüche

1. Gasturbinentriebwerk (10), umfassend eine Hilfsaggregatgetriebeanordnung (28), umfassend ein Hilfsaggregatgetriebe (46) und eine Vielzahl von Hilfsaggregaten (48), die so angeordnet sind, dass sie von dem Hilfsaggregatgetriebe (46) angetrieben werden, das Hilfsaggregatgetriebe (46) umfassend ein Zahnradgetriebe (70) und ein Hilfsaggregatgetriebegehäuse (56), das die Zahnräder des Zahnradgetriebes (70) umschließt, wobei jedes Hilfsaggregat (48) von einer Welle (72) angetrieben wird,
wobei eine erste Vielzahl von Hilfsaggregaten (49A) an einer ersten Seite des Hilfsaggregatgetriebegehäuses (56) gesichert ist, die Wellen (72) der ersten Vielzahl von Hilfsaggregaten (49A) parallel sind, die Welle (72) von jedem Hilfsaggregat (48, 48A) der ersten Vielzahl von Hilfsaggregaten (49A) ein Stirnrad (74) aufweist, die Welle (72A) eines ersten Hilfsaggregats (48A) der ersten Vielzahl von Hilfsaggregaten (49A) ein Kegelrad (76A) aufweist,
wobei eine zweite Vielzahl von Hilfsaggregaten (49B) an einer zweiten gegenüberliegenden Seite des Hilfsaggregatgetriebegehäuses (56) gesichert ist, die Wellen (72) der zweiten Vielzahl von Hilfsaggregaten (49B) parallel sind, die Welle (72) jedes Hilfsaggregats (48, 48B) der zweiten Vielzahl von Hilfsaggregaten (49B) ein Stirnrad (74) aufweist, die Welle (72B) eines zweiten Hilfsaggregats (48B) der zweiten Vielzahl von Hilfsaggregaten (49B) ein Kegelrad (76B) aufweist,
wobei das Zahnradgetriebe (70) die Stirnräder (74) der Hilfsaggregate (48, 48A, 48B) umfasst,
wobei das Kegelrad (76A) des ersten Hilfsaggregats (48A) so angeordnet ist, dass es mit einem weiteren Kegelrad (42) ineinandergreift, und das Kegelrad (76B) des zweiten Hilfsaggregats (48B) so angeordnet ist, dass es mit dem weiteren Kegelrad (42) ineinandergreift, die Wellen (72) der Hilfsaggregate (48, 48A, 48B) in einer V-Form angeordnet sind und das weitere Kegelrad (42) so angeordnet ist, dass es die Hilfsaggregatgetriebeanordnung (28) antreibt, wobei das weitere Kegelrad (42) am radial äußeren Ende einer radialen Antriebswelle angeordnet ist,
**dadurch gekennzeichnet, dass** die Achse der Antriebswelle 72A, 72B, 72 jedes Hilfsaggregats 48 die vertikale Ebene Z schneidet, die die Achse 11 des Gasturbinentriebwerks 10 und die radiale Antriebswelle 38 enthält, und
das Hilfsaggregatgetriebegehäuse (56) an einem Kerntriebwerksgehäuse (50) des Gasturbinentriebwerks (10) montiert ist, eine Kerngondel (52) um das Kerntriebwerksgehäuse (50) angeordnet ist, das Hilfsaggregatgetriebe (46) und die Vielzahl von Hilfsaggregaten (48, 48A, 48B) radial zwischen dem Kerntriebwerksgehäuse (50) und der Kerngondel (52) angeordnet sind.

2. Gasturbinentriebwerk nach Anspruch 1, wobei die Stirnräder (74) von zumindest einigen der Hilfsaggregate (48, 48A, 48B) so angeordnet sind, dass sie ineinandergreifen, um einen Antrieb durch das Zahnradgetriebe (70) zu übertragen.

3. Gasturbinentriebwerk nach Anspruch 2, wobei das Stirnrad (74) auf der Welle (72, 72A, 72B) jedes Hilfsaggregats (48, 48A, 48B) so angeordnet ist, dass es mit einem oder mehreren Stirnrädern (74) auf der entsprechenden Welle (72) anderer Hilfsaggregate (48, 48A, 48B) ineinandergreift.

4. Gasturbinentriebwerk nach Anspruch 1 oder Anspruch 2, wobei das Zahnradgetriebe mindestens ein Zwischenrad umfasst, wobei die Stirnräder von zumindest einigen der Hilfsaggregate so angeordnet sind, dass sie mit Zwischenrädern ineinandergreifen, um einen Antrieb durch das Zahnradgetriebe zu übertragen.

5. Gasturbinentriebwerk nach Anspruch 4, wobei das Stirnrad auf der Welle jedes Hilfsaggregats so angeordnet ist, dass es mit einem oder mehreren Zwischenrädern ineinandergreift, die mit den Stirnrädern auf der entsprechenden Welle anderer Hilfsaggregate ineinandergreifen.

6. Gasturbinentriebwerk nach einem der Ansprüche 1 bis 5, wobei das erste Hilfsaggregat (48A, 48B) das Hilfsaggregat mit der höchsten Leistung und/oder dem höchsten Drehmoment ist.

7. Gasturbinentriebwerk nach Anspruch 6, wobei das erste Hilfsaggregat (48A, 48B) ein Anlasser, ein Elektromotor oder ein elektrischer Generator ist.

8. Gasturbinentriebwerk nach einem der Ansprüche 1 bis 5, wobei das erste Hilfsaggregat (48A) ein Anlasser, ein Elektromotor oder ein elektrischer Generator ist.

9. Gasturbinentriebwerk nach einem der Ansprüche 1 bis 8, wobei das zweite Hilfsaggregat (48B) ein elektrischer Generator ist.

10. Gasturbinentriebwerk nach einem der Ansprüche 1 bis 9, wobei die Wellen (72) der ersten Vielzahl von Hilfsaggregaten (49A) in einer ersten Ebene (X) angeordnet sind und die Wellen (72) der zweiten Vielzahl von Hilfsaggregaten (49B) in einer zweiten Ebene (Y) angeordnet sind.

11. Gasturbinentriebwerk nach Anspruch 10, wobei die erste Ebene (X) und die zweite Ebene (Y) in einem Winkel von weniger als 180° angeordnet sind.

12. Gasturbinentriebwerk nach einem der Ansprüche 1 bis 11, wobei das weitere Kegelrad (42) durch ein zusätzliches Kegelrad (40) angetrieben wird.

13. Gasturbinentriebwerk nach Anspruch 12, wobei das weitere Kegelrad (42) so angeordnet ist, dass es von einem Anlasser oder Anlassermotor (48C) angetrieben wird.

14. Gasturbinentriebwerk nach einem der Ansprüche 12 oder 13, wobei das zusätzliche Kegelrad (40) am radial äußeren Ende einer radialen Antriebswelle (38) angeordnet ist.

15. Gasturbinentriebwerk nach einem der Ansprüche 10 bis 14, wobei das Gasturbinentriebwerk (10) eine Achse (11) aufweist und sich das Hilfsaggregatgetriebegehäuse (56) axial in Bezug auf das Gasturbinentriebwerk (10) erstreckt, wobei das Kerntriebwerksgehäuse (50) im Winkel zwischen der ersten Ebene (X) und der zweiten Ebene (Y) angeordnet ist.

16. Gasturbinentriebwerk nach Anspruch 15, wobei die erste und die zweite Ebene (X, Y) eine vertikale Ebene (Z) schneiden, die die Achse (11) des Gasturbinentriebwerks (10) enthält.

17. Gasturbinentriebwerk nach einem der vorhergehenden Ansprüche, wobei ein Hitzeschild (78) radial zwischen dem Hilfsaggregatgetriebe (46) und der Vielzahl von Hilfsaggregaten (48, 48A, 48B) und dem Kerngehäuse (50) angeordnet ist.

## Revendications

1. Moteur à turbine à gaz (10) comprenant un ensemble boîte d'engrenages d'accessoires (28) comprenant une boîte d'engrenages d'accessoires (46) et une pluralité d'accessoires (48) agencés pour être entraînés par la boîte d'engrenages d'accessoires (46), la boîte d'engrenages d'accessoires (46) comprenant un train d'engrenages (70) et un carter (56) de boîte d'engrenages d'accessoires renfermant les roues dentées du train d'engrenages (70), chaque accessoire (48) est entraîné par un arbre (72),
une première pluralité d'accessoires (49A) sont fixés à un premier côté du carter (56) de boîte d'engrenages d'accessoires, les arbres (72) de la première pluralité d'accessoires (49A) sont parallèles, l'arbre (72) de chaque accessoire (48, 48A) de la première pluralité d'accessoires (49A) comporte une roue dentée droite (74), l'arbre (72A) d'un premier accessoire (48A) de la première pluralité d'accessoires (49A) comporte une roue dentée conique (76A),
une seconde pluralité d'accessoires (49B) sont fixés à un second côté opposé du carter (56) de boîte d'engrenages d'accessoires, les arbres (72) de la seconde pluralité d'accessoires (49B) sont parallèles, l'arbre (72) de chaque accessoire (48, 48B) de la seconde pluralité d'accessoires (49B) comporte une roue dentée droite (74), l'arbre (72B) d'un second accessoire (48B) de la seconde pluralité d'accessoires (49B) comporte une roue dentée conique (76B),
le train d'engrenages (70) comprenant les roues dentées droites (74) des accessoires (48, 48A, 48B),
la roue dentée conique (76A) du premier accessoire (48A) est agencée pour s'engrener avec une roue dentée conique supplémentaire (42) et la roue dentée conique (76B) du second accessoire (48B) est agencée pour s'engrener avec la roue dentée conique supplémentaire (42), les arbres (72) des accessoires (48, 48A, 48B) sont agencés selon une forme en V, et la roue dentée conique supplémentaire (42) est agencée pour entraîner l'ensemble boîte d'engrenages d'accessoires (28), ladite roue dentée conique supplémentaire (42) étant agencée sur l'extrémité radialement externe d'un arbre d'entraînement radial,
**caractérisé en ce que** l'axe de l'arbre d'entraînement 72A, 72B, 72 de chaque accessoire 48 coupe le plan vertical Z contenant l'axe 11 du moteur à turbine à gaz 10 et l'arbre d'entraînement radial 38, et
le carter (56) de boîte d'engrenages d'accessoires étant monté sur un carter de moteur de noyau (50) du moteur à turbine à gaz (10), une nacelle de noyau (52) étant agencée autour du
carter de moteur de noyau (50), la boîte d'engrenages d'accessoires (46) et la pluralité d'accessoires (48, 48A, 48B) étant agencés radialement entre le carter de moteur de noyau (50) et la nacelle de noyau (52).

2. Moteur à turbine à gaz selon la revendication 1, lesdites roues dentées droites (74) d'au moins certains des accessoires (48, 48A, 48B) étant agencées pour s'engrener pour transmettre l'entraînement à travers le train d'engrenages (70).

3. Moteur à turbine à gaz selon la revendication 2, ladite roue dentée droite (74) sur l'arbre (72, 72A, 72B) de chaque accessoire (48, 48A, 48B) étant agencée pour s'engrener avec une ou plusieurs roues dentées droites (74) sur l'arbre correspondant (72) d'autres accessoires (48, 48A, 48B).

4. Moteur à turbine à gaz selon la revendication 1 ou la revendication 2, ledit train d'engrenages comprenant au moins une roue dentée folle, lesdites roues dentées droites d'au moins certains des accessoires étant agencées pour s'engrener avec des roues dentées folles pour transmettre l'entraînement par l'intermédiaire du train d'engrenages.

5. Moteur à turbine à gaz selon la revendication 4, ladite roue dentée droite sur l'arbre de chaque accessoire étant agencée pour s'engrener avec une ou plusieurs roues dentées folles qui s'engrènent avec les roues dentées droites sur l'arbre correspondant d'autres accessoires.

6. Moteur à turbine à gaz selon l'une quelconque des revendications 1 à 5, ledit premier accessoire (48A, 48B) étant l'accessoire de puissance la plus élevée et/ou de couple le plus élevé.

7. Moteur à turbine à gaz selon la revendication 6, ledit premier accessoire (48A, 48B) étant un démarreur, un moteur électrique ou un générateur électrique.

8. Moteur à turbine à gaz selon l'une quelconque des revendications 1 à 5, ledit premier accessoire (48A) étant un démarreur, un moteur électrique ou un générateur électrique.

9. Moteur à turbine à gaz selon l'une quelconque des revendications 1 à 8, ledit second accessoire (48B) étant un générateur électrique.

10. Moteur à turbine à gaz selon l'une quelconque des revendications 1 à 9, lesdits arbres (72) de la première pluralité d'accessoires (49A) étant agencés dans un premier plan (X) et lesdits arbres (72) de la seconde pluralité d'accessoires (49B) étant agencés dans un second plan (Y).

11. Moteur à turbine à gaz selon la revendication 10, ledit premier plan (X) et ledit second plan (Y) étant agencés selon un angle inférieur à 180°.

12. Moteur à turbine à gaz selon l'une quelconque des revendications 1 à 11, ladite roue dentée conique supplémentaire (42) étant entraînée par une roue dentée conique additionnelle (40).

13. Moteur à turbine à gaz selon la revendication 12, ladite roue dentée conique supplémentaire (42) étant agencée pour être entraînée par un démarreur ou un moteur démarreur (48C).

14. Moteur à turbine à gaz selon l'une ou l'autre des revendications 12 ou 13, ladite roue dentée conique additionnelle (40) étant agencée sur l'extrémité radialement externe d'un arbre d'entraînement radial (38).

15. Moteur à turbine à gaz selon l'une quelconque des revendications 10 à 14, ledit moteur à turbine à gaz (10) possédant un axe (11) et ledit carter (56) de boîte d'engrenages d'accessoires s'étendant axialement par rapport au moteur à turbine à gaz (10), ledit carter de moteur de noyau (50) étant agencé dans l'angle entre le premier plan (X) et le second plan (Y).

16. Moteur à turbine à gaz selon la revendication 15, lesdits premier et second plans (X, Y) coupant un plan vertical (Z) contenant l'axe (11) du moteur à turbine à gaz (10).

17. Moteur à turbine à gaz selon une quelconque revendication précédente, un bouclier thermique (78) étant agencé radialement entre la boîte d'engrenages d'accessoires (46) et la pluralité d'accessoires (48, 48A, 48B) et le carter de noyau (50).
